# EUROPÄISCHE PATENTSCHRIFT

(11) **EP 1 305 529 B1**
(45) Veröffentlichungstag und Bekanntmachung des Hinweises auf die Patenterteilung: **01.03.2006**
(21) Anmeldenummer: 01967200.5
(22) Anmeldetag: 18.07.2001
(51) Int. Cl.: F16B 37/12, F16B 13/00

(54) **DÜBEL FÜR LEICHTBAUSTOFFE UND VERWENDUNG EINES SCHRAUBENDREHERBITS ZUM EINSCHRAUBEN EINES SOLCHEN DÜBELS**
DOWEL FOR LIGHTWEIGHT BUILDING MATERIALS AND USE OF A SCREW DRIVER BIT FOR SCREWING IN SUCH DOWELS
CHEVILLE POUR MATERIAUX LEGERS, ET UTILISATION D'UN EMBOUT DE TOURNEVIS POUR VISSER UNE TELLE CHEVILLE

(30) Priorität: 04.08.2000 DE 10038016
(43) Veröffentlichungstag der Anmeldung: 02.05.2003
(73) Patentinhaber: Adolf Würth GmbH & Co. KG, 74653 Künzelsau (DE)
(72) Erfinder: KERL, Gregor, 74676 Niedernhall (DE)
(74) Vertreter: Patentanwälte Ruff, Wilhelm, Beier, Dauster & Partner
(86) Internationale Anmeldenummer: PCT/EP2001/008269
(87) Internationale Veröffentlichungsnummer: WO 2002/012737

(56) Entgegenhaltungen:
- DE-A- 1 575 180
- GB-A- 2 199 106
- GB-A- 2 240 828
- US-A- 5 558 479

## Beschreibung

Die Erfindung geht aus von einem Dübel für Leichtbaustoffe. Es ist bereits ein solcher Dübel bekannt (EP 618376). Dieser Dübel besitzt eine Dübelhülse, die an ihrem vorderen Ende eine selbst schneidende Spitze aufweist. An ihrer Außenseite enthält die Dübelhülse ein selbstschneidendes Gewinde. Die sich durch den ganzen Dübel erstreckende Innenöffnung weist die Form eines Kreiszylinders mit nach innen vorspringenden dreieckigen Rippen auf. Dadurch wird der Querschnitt eines Kreuzes gebildet. In den Dübel kann eine Schraube eingeschraubt werden, die sich in den Rippen ihr Gewinde selbst formt. Zum Einschrauben der Dübelhülse in den Leichtbaustoff kann ein Kreuzschlitzschraubendreher verwendet werden, der dann auch zum Einschrauben der Schraube in die befestigte Dübelhülse dienen kann. Dies hat den Vorteil, dass das Werkzeug nicht gewechselt werden muss.

Bei den Schrauben, die mit solchen Dübeln verwendet werden, handelt es sich in erster Linie um Senkkopfschrauben.

Die üblichen Kreuzschlitzausnehmungen und zugehörigen Werkzeuge haben eine Querabmessung, die in Richtung auf das freie Ende des Werkzeugs bzw. auf den Boden der Antriebsausnehmung abnimmt. Daher ist die größte Querabmessung des Werkzeugs ausreichend groß, so dass das gleiche Werkzeug, das zum Eindrehen der Schraube verwendet wird, auch zum Eindrehen des Dübels verwendet werden kann.

Bei Schraubenantriebsausnehmungen und Werkzeugen, bei denen die Querabmessung nur geringfügig abnimmt, beispielsweise Sechskantausnehmungen, muss das Werkzeug für einen Schraubenkopf aber in seiner Abmessungen anders gestaltet sein. Seine größte Querabmessung reicht nicht aus, um eine Drehverbindung zwischen der Innenöffnung der Dübelhülse und dem Werkzeug herzustellen.

Es ist bereits ein Einschraubdübel für weiche Baustoffe bekannt (DE-U1-29812947). Dieser weist eine Innenöffnung mit kreisrundem Querschnitt zur Aufnahme eines Gewindeschafts auf, wobei der vordere Teil der Innenöffnung einen sechskantigen Querschnitt aufweist. Dieser dient zum Einsetzen eines Drehwerkzeugs.

Weiterhin ist ein Einschraubdübel bekannt (US 5558479), bei dem die Innenöffnung in Längsrichtung verlaufende Rippen aufweist. In diese Rippen kann sich eine Schraube beim Einschrauben ein Gewinde formen. Zum Einschrauben des Dübels wird ein anderes Werkzeug benötigt als zum Einschrauben der Schraube in den eingeschraubten Dübel.

Der Erfindung liegt die Aufgabe zu Grunde, einen Dübel, insbesondere für Leichtbaustoffe, zu schaffen, bei dem es möglich ist, auch bei anderen Formen der Schraubenantriebsausnehmung mit einem einzigen Werkzeug für den Dübel und für die Schraube auszukommen.

Zur Lösung dieser Aufgabe schlägt die Erfindung einen Dübel mit den Merkmalen des Anspruchs 1 vor. Weiterbildungen der Erfindung sind Gegenstand der abhängigen Ansprüche, deren Wortlaut durch Bezugnahme zum Inhalt der Beschreibung gemacht wird.

Die Werkzeuge zum Eindrehen von Schrauben werden üblicherweise als Bit ausgebildet. Alle Bits haben einen in seiner Größe genormten Sechskantansatz, mit dem sie in einen elektrischen Schrauber eingesetzt werden können. Von diesem Sechskantansatz aus erstreckt sich das eigentliche Antriebswerkzeug nach vorne, wobei dieses Antriebswerkzeug in seiner Querabmessung üblicherweise kleiner ist als der Sechskantansatz. Durch die Sechskantform der Ausnehmung der Dübelhülse im vorderen Bereich kann jetzt der etwas aus dem Werkzeugfutter herausragende Sechskantansatz dazu verwendet werden, die Dübelhülse einzuschrauben. Es kann hierzu das Werkzeug verwendet werden, das auch für das Eindrehen der Schraube zuständig ist. Mit geringstem Aufwand ist es daher möglich, auch bei von einem Kreuzschlitz abweichenden Antriebsformen mit einem einzigen Werkzeug ohne Wechsel auszukommen. Ein weiterer Vorteil ist dadurch gegeben, dass das Antriebswerkzeug tiefer in die Dübelhülse eingreifen kann, so dass diese während des Einschraubens des Dübels besser geführt werden kann.

Die axiale Länge der Sechskantform der Innenöffnung braucht nur gering zu sein, da diese Form in erster Linie zur Übertragung eines Drehmoments dient. So kann es beispielsweise ausreichen, wenn die axiale Länge mindestens etwa der halben Länge der Seite des Sechsecks entspricht.

Bei der Innenöffnung kann es sich im restlichen Bereich um eine zylindrische Öffnung handeln, bei der ein Gewinde schon eingeschnitten ist. Insbesondere kann es sich aber um eine kreiszylindrische Innenöffnung mit nach innen vorspringenden Rippen handeln, die noch kein Gewinde aufweisen, so dass beim Einschrauben der Schraube diese sich ihr Gewinde selbst formt. Das Material der Dübelhülse kann beispielsweise Zinkdruckguss oder auch Kunststoff sein. Insbesondere ist es sinnvoll, die Rippen gleichmäßig über den Umfang verteilt anzuordnen, beispielsweise wieder vier Rippen wie im Stand der Technik

Die Rippen können dabei so dimensioniert sein, dass der Werkzeugvorsprung, der für die Schraube gedacht ist, mit geringem Spiel zwischen den Spitzen der Rippen hindurch greifen kann.

Insbesondere kann vorgesehen sein, dass der Dübel eine Bohrspitze bzw. eine Schneidspitze aufweist, mit der sich das Loch in dem Leichtbaustoff selbst bildet.

Das Gewinde an der Außenseite der Hülse kann mit Vorteil selbstschneidend sein.

Weitere Merkmale, Einzelheiten und Vorzüge der Erfindung ergeben sich aus der folgenden Beschreibung einer bevorzugten Ausführungsform der Erfindung sowie an Hand der Zeichnung. Hierbei zeigen:
- Fig. 1: einen Längsschnitt durch eine Dübelhülse nach der Erfindung mit angedeutetem Werkzeug;
- Fig. 2: eine Ansicht des Dübels von oben in Figur 1;
- Fig. 3: einen Querschnitt durch den Dübel.

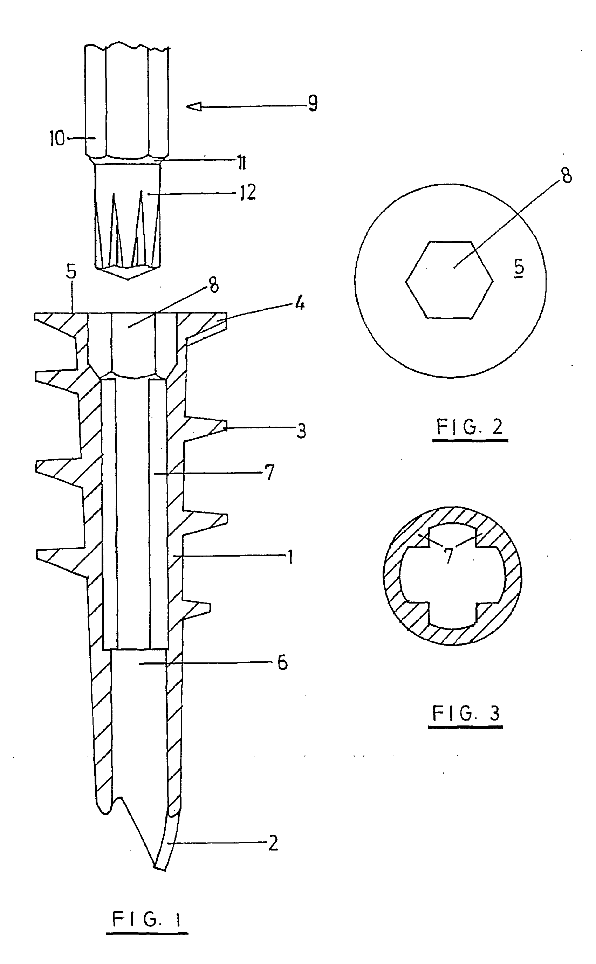

In Figur 1 ist im Längsschnitt eine Dübelhülse 1 dargestellt, die beispielsweise aus Zinkdruckguss besteht. An ihrem inneren, in Figur 1 unteren Ende, enthält sie eine Schneidspitze 2, die eine scharfe Kante bildet. An der Außenseite ist die Dübelhülse mit einem Gewinde 3 versehen, das als selbstschneidendes Gewinde ausgebildet ist. Die Höhe der Gewindegänge nimmt über die Länge der Dübelhülse zu. An ihrem der Vorderseite der Wand zugeordneten Ende ist die Dübelhülse mit einem flanschartigen Kopf 4 versehen, der von einer ebenen Vorderfläche 5 begrenzt wird.

Die Dübelhülse 1 enthält eine Innenöffnung 6, die in dem der Dübelspitze 2 zugeordneten Bereich kreisrund ist, während sie im restlichen Bereich vier in Axialrichtung verlaufende nach innen vorstehende Rippen 7 aufweist. In ihrem dem Dübelkopf 4 zugewandten Ende ist die Innenöffnung 6 mit einem Sechskantquerschnitt 8 versehen.

Wie man der Figur 3 entnehmen kann, sind die vier Rippen 7 gleichmäßig über den Umfang verteilt, so dass der Querschnitt in diesem Bereich etwa die Form eines Kreuzes aufweist.

Der Figur 2 kann man entnehmen, dass von der Kopfseite des Dübels ausgehend zunächst eine Innenöffnung mit einem sechseckigen Querschnitt vorhanden ist.

In Figur 1 ist oberhalb des Dübels ein Werkzeug 9 abgebrochen dargestellt, wie es beispielsweise für eine Schraube verwendet werden kann. Das Werkzeug enthält einen Sechskantansatz 10, der zum Einstecken in ein Futter eines Antriebswerkzeugs ausgebildet ist. Die Größe dieses Sechskantansatzes ist festgelegt, da in ein Futter unterschiedliche Werkzeuge eingesetzt werden können. Von der Stirnseite 11 des Sechskantansatzes 10 aus erstreckt sich ein Werkzeugansatz 12, der etwa die Form eines Kegelstumpfes mit nach außen ragenden Verrippungen aufweist. Die Außenseite der Verrippungen liegen innerhalb eines Kreises. Dieser vordere Werkzeugansatz 12 kann in die Innenöffnung 6 eingeschoben werden, wobei die Rippen 7 so dimensioniert sind, dass der Ansatz zwischen den Rippen 7 Platz hat. Wenn man das Werkzeug soweit in die Dübelhülse 1 einschiebt, gelangt der Sechskantansatz 10 mit seinem vorderen Bereich in die sechskantige Innenöffnung 8 des Dübels. Der Dübel kann dann mit Hilfe des Schraubers in eine Wand, beispielsweise eine Gipskartonplatte, eingeschraubt werden. Da der vordere Werkzeugansatz 12 mit geringem Abstand von den Rippen 7 angeordnet ist, kann er zur Führung der Dübelhülse während des Beginns des Einschraubens dienen.

Nach dem vollständigen Einschrauben der Dübelhülse wird das Werkzeug aus dieser herausgezogen. Anschließend wird der Ansatz 12 in die Antriebsausbildung einer Schraube eingesetzt, die dann in die Dübelhülse eingeführt und verdreht wird. Diese schneidet sich dann in den Rippen 7 ihr eigenes Gewinde. Der Dübel und die Schraube können ohne Werkzeugwechsel eingeschraubt werden.

## Patentansprüche

1. Dübel, insbesondere für Leichtbaustoffe, mit
1.1 einer Dübelhülse (1),
1.2 einem Gewinde (3) an der Außenseite der Dübelhülse (1) und
1.3 einer Innenöffnung (6), die
1.3.1 von der Vorderseite (5) der Dübelhülse (1) her zugänglich ist und
1.3.2 zur Aufnahme einer Schraube ausgebildet ist, wobei
1.4 der vordere Teil (8) der Innenöffnung (6) die Form einer Sechskantvertiefung aufweist,
**dadurch gekennzeichnet, dass**
1.5 die Sechskantvertiefung derart dimensioniert ist, dass der in das Futter eines Antriebswerkzeugs einsteckbare Sechskantansatz (10) eines Schraubendreherbits, dessen werkzeugansatz die Schraube in den Dübel einschrauben kann, in die Sechskantvertiefung zur Verdrehung der Dübelhülse (1) eingreifen kann.

2. Dübel nach Anspruch 1, bei dem die axiale Länge der Sechskantvertiefung (8) mindestens etwa der Hälfte der Seitenlänge des Sechsecks entspricht.

3. Dübel nach Anspruch 1 oder 2, bei dem die Innenöffnung (6) der Dübelhülse (1) in Axialrichtung der Dübelhülse (1) verlaufende nach innen vorspringende Rippen (7) aufweist.

4. Dübel nach Anspruch 3, bei dem die Rippen (7) gleichmäßig über den Umfang verteilt sind.

5. Dübel nach einem der vorhergehenden Ansprüche, mit einer Bohrspitze (2).

6. Dübel nach einem der vorhergehenden Ansprüche, bei dem das Gewinde (3) selbstschneidend ist.

7. Verwendung eines Schraubendreherbits zum Einschrauben eines Dübels nach einem der vorhergehenden Ansprüche, wobei der zum Antrieb des Bits dienende Sechskant in den vorderen sechskantigen Teil (8) der Innenöffnung (6) eingreift.

## Claims

1. Dowel particularly for light building materials, with
1.1 a dowel sleeve (1)
1.2 a thread (3) on the outer side of the dowel sleeve (1) and
1.3 an internal opening (6) that
1.3.1 is accessible from the front side (5) of the dowel (1) and
1.3.2 shaped for accommodating a screw, whereby
1.4 the front part (8) exhibits an internal opening (6) that has the shape of an hexagonal recess, **characterized in that**
1.5 the hexagonal recess is dimensioned such that the hexagonal attachment (10) of a screwdriver bit that can be fitted into the chuck of a driving tool, whose tool attachment can drive a screw into the dowel, can interlock in the hexagonal recess for driving-in the dowel sleeve.

2. Dowel according to Claim 1, wherein the axial length of the hexagonal recess (8) at least corresponds to half the longitudinal length of the hexagon.

3. Dowel according to Claim 1 or 2, by which the internal opening (6) of the dowel sleeve (1) exhibits ribs (7) inwardly projecting and aligned in axial direction of the dowel sleeve (1).

4. Dowel according to Claim 3, wherein the ribs (7) are uniformly distributed over the circumference.

5. Dowel according to one of the foregoing claims with a drilling tip (2).

6. Dowel according to one of the foregoing claims by which the thread (3) is self-cutting.

7. Application of a screwdriver bit for driving a dowel according to one of the foregoing claims, whereby the hexagon for driving the bit interlocks into the front hexagonal part (8) of the internal opening (6).

## Revendications

1. Cheville, plus particulièrement pour matériaux de construction légers, avec
1.1 une douille de cheville (1),
1.2 un filetage (3) sur la face extérieure de la douille de cheville (1) et
1.3 une ouverture intérieure (6), qui
1.3.1 est accessible depuis la face avant (5) de la douille de cheville (1) et
1.3.2 formée pour recevoir une vis, où
1.4 la partie avant (8) de l'ouverture intérieure (6) présente la forme d'un creux hexagonal, **caractérisée en ce que**
1.5 le creux hexagonal est dimensionné de telle sorte que l'embase hexagonale (10), enfichable sur le mandrin d'un outil d'entraînement, d'un embout de tournevis dont l'embout d'outil permet de visser la vis dans la cheville, peut s'engager dans le creux hexagonal de la douille de cheville (1) pour faire tourner celle-ci.

2. Cheville selon la revendication 1, sur laquelle la longueur axiale du creux hexagonal (8) correspond au moins approximativement à la moitié de la longueur d'un côté de l'hexagone.

3. Cheville selon la revendication 1 ou 2, sur laquelle l'ouverture intérieure (6) de la douille de cheville (1) présente des nervures saillantes vers l'intérieur (7) dans le sens axial de la douille de cheville (1).

4. Cheville selon la revendication 3, sur laquelle les nervures (7) sont réparties uniformément sur le pourtour.

5. Cheville selon l'une quelconque des revendications précédentes, avec une pointe foreuse (2).

6. Cheville selon l'une quelconque des revendications précédentes, sur laquelle le filetage (3) est auto-taraudant.

7. Utilisation d'un embout de tournevis pour le vissage d'une cheville selon l'une quelconque des revendications précédentes, dont l'hexagone servant à l'entraînement de l'embout de tournevis pénètre dans la partie hexagonale avant (8) de l'ouverture intérieure (6).
